Europäisches Patentamt

European Patent Office

Office européen des brevets

(19)

(11) **EP 1 209 698 A1**

(12) **EUROPEAN PATENT APPLICATION**
published in accordance with Art. 158(3) EPC

(43) Date of publication:
29.05.2002 Bulletin 2002/22

(51) Int Cl.[7]: **H01B 5/14**, B32B 5/16,
B32B 7/02, C08J 7/04,
C03C 17/23

(21) Application number: 01932103.3

(22) Date of filing: 17.05.2001

(86) International application number:
**PCT/JP01/04100**

(87) International publication number:
**WO 01/91136 (29.11.2001 Gazette 2001/48)**

(84) Designated Contracting States:
**DE NL**

(30) Priority: **21.05.2000 JP 2000188430**

(71) Applicant: **TDK Corporation**
**Tokyo 103-8272 (JP)**

(72) Inventors:
• **TAMAI, Kiminori**
**Tokyo 103-8272 (JP)**

• **IIJIMA, Tadayoshi**
**Tokyo 103-8272 (JP)**

(74) Representative: **HOFFMANN - EITLE**
**Patent- und Rechtsanwälte**
**Arabellastrasse 4**
**81925 München (DE)**

(54) **TRANSPARENT CONDUCTIVE MULTILAYER BODY AND METHOD FOR PRODUCING THE SAME**

(57)    It is disclosed a transparent conductive multi-layer structure which comprises a substrate overlaid, desirably interposed by a support, with a conductive layer containing fine conductive particles, preferably the fine particles of indium-tin oxide (ITO), said multi-layer structure having a surface resistance of 10 - 10³ $\Omega/\square$ and a visible light transmittance of at least 70%. A process for producing this structure is also disclosed. The present invention can produce transparent conductive multi-layer structures by utilizing a coating method which retains the advantages of its easiness of forming large-area conductive films, simplification of apparatus, high productivity and low manufacturing cost, by firstly obtaining a transparent conductive film that has low enough surface resistance to give high conductivity while exhibiting satisfactory transparency, and then applying the transparent conductive film to a glass or resin panel, etc.

EP 1 209 698 A1

**Description**

BACKGROUND OF THE INVENTION

1. Field of the Invention

This invention relates to a transparent conductive multi-layer structure and a process for producing the same. The transparent conductive multi-layer structure of the invention is preferably used to make glass panels as a CRT faceplate, a PDP faceplate, a construction material and a vehicular component, or to make resin panels as a construction material, a vehicular component and for use in a semiconductor cleanroom. The transparent conductive multi-layer structure of the invention is also used as an electromagnetic shield panel.

2. Description of Relevant Art

Transparent conductive films comprising a support overlaid with a conductive layer containing an electroconductive material are mainly produced by sputtering. While sputtering can be accomplished by various means, the following may be given as an example where ions of an inert gas generated by DC or RF discharge in vacuum are accelerated to impinge on a target (e.g., a conductive material) so that constitutional atoms thereof are knocked off from the target surface and deposited on the support surface to form a transparent conductive layer.

Sputtering has the advantage of forming conductive layers of low surface electric resistance even when the support has a comparatively large area. The disadvantages of the sputtering process include the need of using a bulky and complicated apparatus and slow deposition rate. However, the size of the apparatus is anticipated to increase in the future with the growing need for an even larger area of conductive layers. The increase in apparatus size will in turn cause not only a technical problem, such as the need for an ever increasing precision in control, but also an efficiency problem, such as increased manufacturing cost. The sputtering method currently adopted to increase the deposition rate is by using more targets, but this also contributes to increased size of the apparatus.

Attempts are also being made to produce transparent conductive films by a coating method. In a conventional coating method, a conductive coating solution having fine conductive particles dispersed in a binder resin is applied onto a support, and dried to form a conductive layer. The coating method has several advantages over the sputtering process in its easiness of forming large-area conductive layers, simplification of apparatus, high productivity and low manufacturing cost. In the conductive film formed by the coating method, the fine conductive particles in the conductive layer contact each other, thereby to form a path over which electrons flow to provide conductivity.

In producing transparent conductive films by the coating method, it has generally been held that the conductive layer cannot be formed unless the binder resin is used in large amounts. However, the binder resin in such large amounts prevents contact between fine conductive particles and therefore the transparent conductive film produced has undesirably high electric resistance (poor conductivity) and finds only limited use. An attempt has been made to perform the coating method without using binder resin but the general understanding is that practically feasible conductive layers cannot be formed unless the conductive material is sintered at high temperature.

A specific example of the conventional coating method is described in JP-A-9-109259, which is a process for producing an anti-static transparent conductive film or sheet comprising the following three steps of applying a conductive coating solution comprising a conductive powder and a binder resin onto a transferable plastic film, and drying it to form a conductive layer (first step), pressing (5 - 100 kg/cm$^2$) and heating (70 - 180 °C) the conductive layer to have a smooth surface (second step), and placing the so treated conductive layer by thermocompressing onto a plastic film or sheet (third step).

The coating solution used in the aforementioned coating process contains the binder resin in large amounts: If the conductive powder is inorganic, it is used in an amount of 100 - 500 parts by weight for 100 parts by weight of the binder; if the conductive powder is organic, it is used in an amount of 0.1 - 30 parts by weight for 100 parts by weight of the binder. On account of such massive use of the binder resin, the technique disclosed in JP-A-9-109259 is unable to produce transparent conductive films of sufficiently low electric resistance. Even in the case of its least use, the content of the binder resin is 100 parts by weight compared to 500 parts by weight of the inorganic conductive powder, and in terms of volume as calculated from the binder's density disclosed in JP-A-9-109259, this is equivalent to a value of about 110 for the binder as compared to a value of 100 for the conductive powder.

JP-A-8-199096 discloses a process for producing a glass plate overlaid with a transparent conductive film, which comprises applying onto a glass plate a coating solution for forming a conductive film containing a tin-doped indium oxide powder, or rather, an indium-tin oxide (ITO) powder, a solvent, a coupling agent and a metal salt of an organic or inorganic acid but that does not contain a binder, and firing the applied coating at a temperature of at least 300 °C. Since no binder is used in this method, conductive films of reduced electric resistance can be formed. However, firing the applied coating at 300 °C or above introduces difficulty in forming the conductive film on resin films. Resin films used as the support will deform, melt, char or burn out at medium to high temperatures. The limit on heating varies with the type of resin film and is considered to be about 130 °C for a polyethylene terephthalate (PET) film.

Non-coating based production methods have also been proposed. JP-A-6-13785 discloses a conductive coating comprising a compressed powder layer and an underlying resin layer, where the compressed powder layer having a resin packed in at least part, preferably all, of the voids in a skeletal structure composed of a powder of a conductive substance (metal or alloy). In forming the conductive coating on a substrate sheet, the resin, the powder substance (metal or alloy) and the substrate are shaken or agitated in a vessel together with a film forming medium, e.g., steel balls of a few millimeters in diameter, whereby a resin layer is formed onto the surface of the substrate, and then the powder substance is trapped and anchored onto the resin layer by its adhesive power. Further, the film forming medium being shaken or agitated impacts the powder substance as it is shaken or agitated, thereby forming the compressed powder layer. However, this technique still requires a significant amount of resin in order to secure anchorage of the compressed powder layer, making it difficult to obtain conductive coatings having low electrical resistance. Another drawback is that the said technique as a production process is more complex than the coating method.

JP-A-9-107195 teaches another non-coating based method which comprises sprinkling conductive short fibers over a PVC or other film to form a fiber deposit which is pressed to form a layer in which the conductive short fibers are integral with the resin. The conductive short fibers are polyethylene terephthalate or other short fibers that are plated with a metal such as nickel. Pressing is preferably performed under such temperature conditions that the resin matrix layer shows thermoplasticity, as exemplified by a high-temperature (175 °C) heating, low-pressure (20 kg/cm$^2$) process condition.

## SUMMARY OF THE INVENTION

The present invention has as an object of providing transparent conductive multi-layer structures by utilizing the coating method which retains the advantages of its easiness of forming large-area conductive films, simplification of apparatus, high productivity and low manufacturing cost, by firstly obtaining transparent conductive films that have low enough surface resistance to give high conductivity while ex-hibiting satisfactory transparency, and then applying the transparent conductive films to glass or resin panels.

Another object of the invention is to provide processes for producing the transparent conductive multi-layer structures.

According to its first aspect, the invention relates to a transparent conductive multi-layer structure of first type which comprises a substrate overlaid with a support which in turn is overlaid with a conductive layer containing fine conductive particles, said multi-layer structure having a surface resistance of 10 - 10$^3$ Ω/□ and a visible light transmittance of at least 70%.

The invention also relates to a transparent conductive multi-layer structure of second type which may be referred to a transferrable transparent conductive multi-layer structure, which comprises a substrate overlaid with a conductive layer containing fine conductive particles, said multi-layer structure having a surface resistance of 10 - 10$^3$ Ω/□ and a visible light transmittance of at least 70%.

According to its second aspect, the invention relates to a process for producing the transparent conductive multi-layer structure of first type which comprises producing a transparent conductive film by applying a dispersion of fine conductive particles onto a support, drying the applied coating to form a layer containing the fine conductive particles, compressing the layer to form a compressed layer of the fine conductive particles, and thereafter applying said transparent conductive film on a substrate.

The invention also relates to a process for producing the transparent conductive multi-layer structure of second type which comprises producing a transparent conductive film by applying a dispersion of fine conductive particles onto a support, drying the applied coating to form a layer containing the fine conductive particles, then compressing said layer to form a compressed fine conductive particles layer, and subsequently adhering to a substrate said compressed fine conductive particles layer of the transparent film, and thereafter stripping away the support from the compressed layer.

The invention also relates to a process for producing a transparent conductive multi-layer structure of second type which comprises preparing a support overlaid with a hard coating layer and an anchor coating layer in the order, producing a transparent conductive film by applying a dispersion of fine conductive particles onto the anchor coating layer, drying the applied coating to form a layer containing the fine conductive particles, then compressing said layer to form a compressed fine conductive particles layer, and subsequently adhering to a substrate said compressed fine conductive particles layer of the transparent film, and thereafter stripping away the support from the hard coating layer.

## BRIEF DESCRIPTION OF THE DRAWINGS

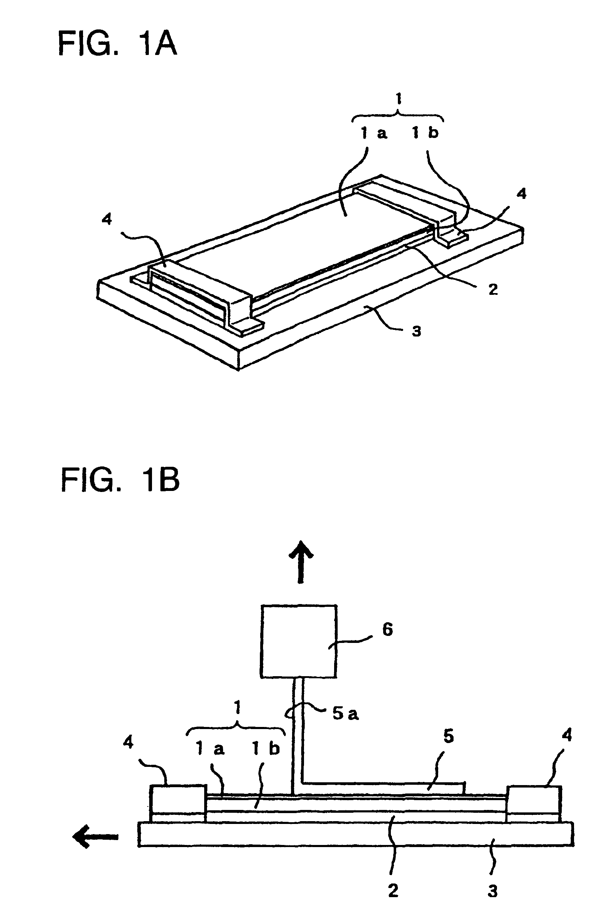

Figs. 1A and 1B show how a 90° peel test was conducted in the Examples.

DETAILED DESCRIPTION OF THE INVENTION

We now describe the present invention in detail.

The transparent conductive multi-layer structure of the invention is what either comprising a substrate overlaid with a support which in turn is overlaid with a conductive layer containing fine conductive particles (first type), or comprising a substrate overlaid with a conductive layer containing fine conductive particles (second or transferrable type).

The fine conductive particles to be contained in the conductive layer in the first and second types of transparent conductive multi-layer structure are not limited in any particular way but the fine particles of tin-doped indium oxide, or rather, of indium-tin oxide (ITO), are preferably used. In the present invention, as fine conductive particles such as the fine particles of indium-tin oxide (ITO) are contained in the conductive layer, the invention does not encompass an embodiment where a crystalline film of a conductive substance such as ITO has been generated in the conductive layer. The thickness of the conductive layer is not limited to any particular value and is variable with several factors such as the use and object of the transparent conductive multi-layer structure to which it is applied, but a preferred range is about 0.1 - 10 $\mu$m.

[Transparent conductive film]

To produce the first and second types of transparent conductive multi-layer structure, a transparent conductive film having the above-mentioned conductive layer formed on a support is preferably used. As will be described later in this specification, the support is stripped away in the last step of production of the second (transferrable) type of transparent conductive multi-layer structure.

The support is not limited in any particular way and various types including resin film, glass and ceramics can be used. Flexible, highly transparent supports are preferred, so resin films are preferably used. Exemplary resin films include polyester films such as a poly(ethylene terephthalate) (PET) film, polyolefin films such as a polyethylene and a polypropylene film, polycarbonate films, acrylic films and polynorbornene films (e.g. ARTON of JSR Co., Ltd.). Among these resin films, the PET film is particularly preferred. The thickness of the support is not limited to any particular value but the preferred range is about 10 - 200 $\mu$m.

The process for producing the transparent conductive film is not limited in any particular way but the preferred method is as follows.

A dispersion of fine conductive particles is applied on the support and dried to form a layer containing the fine conductive particles and said layer is compressed to form a compressed fine-conductive-particles layer.

In the present invention, the fine particles of indium-tin oxide (ITO) are preferably used as the fine conductive particles. Besides the fine ITO particles, the fine particles of any other conductive substances may be used to an extent that will not impair the transparency of the conductive film so much as to be deleterious to the objects of the invention. Preferred examples are the fine particles of inorganic conductive substances such as tin oxide, indium oxide, zinc oxide, cadmium oxide, anti-mony-doped tin oxide (ATO), fluorine-doped tin oxide (FTO) and aluminum-doped zinc oxide (AZO). Alternatively, the fine particles of organic conductive substances may be used. The size of the fine conductive particles is variable not only with the required degree of scattering that depends on the use of the conductive film but also with the morphology of the particles. A typical particle size is not more than 1 $\mu$m, preferably not more than 0.5 $\mu$m, more preferably in the range of 5 - 100 nm.

The liquid (dispersion medium) in which the fine conductive particles are to be dispersed is not limited to any particular type and various known dispersion media may be used. Examples include saturated hydrocarbons, such as hexane; aromatic hydrocarbons, such as toluene and xylene; alcohols, such as methanol, ethanol, propanol and butanol; ketones, such as acetone, methyl ethyl ketone, methyl isobutyl ketone and diisobutyl ketone; esters, such as ethyl acetate and butyl acetate; ethers, such as tetrahydrofuran, dioxane and diethyl ether; amides, such as N,N-dimethylformamide, N-methylpyrrolidone (NMP) and N,N-dimethylacetamide; and halogenated hydrocarbons, such as ethylene chloride and chlorobenzene. Among these, polar dispersion media are preferred and, in particular, those having affinity for water such as alcohols (e.g., methanol and ethanol) and amides (e.g., NMP) are preferably used since they provide a satisfactory dispersion in the absence of dispersion aids. The above-mentioned dispersion media can be used either alone or in admixture. Depending on the type of dispersion medium, a dispersion aid may also be used.

Water is another candidate for the dispersion medium. In the case where water is used as the dispersion medium, the support must be hydrophilic. Resin films are usually hydrophobic and tend to repel water, making it difficult to give a uniform layer. In the case where the support is a resin film, it is necessary to mix water with alcohol or render the surface of the support hydrophilic.

The amount of the dispersion medium to be used is not limited to any particular value, provided that the conductive coating solution, or the dispersion (i.e., coating solution, conductive coating solution) of the fine conductive particles, should have a viscosity suitable for application. Specifically, the dispersion medium is preferably used in an amount of about 100 - 100,000 parts by weight per 100 parts by weight of the fine conductive particles, and the exact value is adjustable depending on the types of the conductive substance and the dispersion medium.

The fine conductive particles can be dispersed in the dispersion medium by any known dispersing means such as milling on a sand grinder. In the dispersing operation, media such as zirconia beads are preferably used to disintegrate the lumps of fine conductive particles. Care should also taken to prevent the entrance of dust and other impurities during the dispersing operation.

In the coating solution or the dispersion of the fine conductive particles, the binder resin is preferably used in amounts of less than 25 in terms of pre-dispersion volume relative to the volume of the fine conductive particles which is taken as 100. More preferably, the binder resin is used in amounts of less than 20, particularly preferably less than 3.7; most preferably, no binder resin should be used. Resins can reduce light scattering from the conductive film but, on the other hand, they increase its electrical resistance. Insulating resins interfere with the contact between fine conductive particles, and if the resin content is high, the contact between fine conductive particles is so much affected that effective transfer of electrons will not take place between fine conductive particles. It is therefore recommended that the resin be used within the stated volume range considering the balance between improvement in transparency and electrical continuity between fine conductive particles.

The volumes of the fine conductive particles and the binder resin are not apparent volume but true volume. To determine true volume, density is first measured with a suitable instrument such as a pycnometer in accordance with JIS (Japanese Industrial Standard) Z 8807 and substituted into the following formula of [the weight of a material of interest]/[the density of the material]. The amount of the resin to be used is specified not by weight but by volume in order to give a better approximation of the actual state in which the resin exists as relative to the fine conductive particles in the compressed conductive layer.

In the conventional coating method, the coating is not compressed as intensely as in the production process of the invention (see below), so it has been necessary to incorporate a sufficient quantity of the binder resin to secure the necessary mechanical strength of the coating film. If the resin is contained in a sufficient quantity to function as a binder, the contact between fine conductive particles and hence electron flow between themselves is prevented by the binder to impair electrical continuity.

The binder resin is not limited to any particular types and highly transparent thermoplastic resins or polymers having both rubber elasticity and high transparency can be used either alone or in admixture. Exemplary resins include fluorine-containing polymers, silicone resins, acrylic resins, poly(vinyl alcohol), carboxymethyl cellulose, hydroxypropyl cellulose, regenerated cellulose, cellulose diacetate, poly(vinyl chloride), poly(vinyl pyrrolidone), polyethylene, polypropylene, styrene-butadiene rubber (SBR), polybutadiene and poly(ethylene oxide).

Exemplary fluorine-containing polymers include poly(tetrafluoroethylene), poly(vinylidene fluoride) (PVDF), vinylidene fluoride/trifluoroethylene copolymer, ethylene/tetrafluoroethylene copolymer and propylene/tetrafluoroethylene copolymer. Fluorine-containing polymers having hydrogen in the backbone chain substituted by alkyl group can also be used. The higher the density of the resin to be used, the greater the chance of meeting the requirements of the invention because the increased use of the resin does not cause a corresponding increase in volume.

Various additives may be incorporated in the dispersion of fine conductive particles to an extent that will not impair electrical continuity. Exemplary additives include a UV absorber, a surfactant and a dispersion aid.

The thus prepared coating solution or dispersion of fine conductive particles is then applied on a support and dried to form a layer containing the fine conductive particles.

To apply the coating solution or dispersion of fine conductive particles on the support, various known coating methods can be used without particular limitation, as exemplified by reverse roll coating, direct roll coating, blade coating, knife coating, extrusion nozzle coating, curtain coating, gravure roll coating, bar coating, dip coating, kiss coating and squeeze coating. If desired, the dispersion can be deposited on the support as by spraying.

The drying temperature depends on the kind of the dispersion medium used and is preferably in the range of about 10 - 150 °C. Below 10 °C. the moisture in air will easily condense; beyond 150 °C, the resin film (support) may sometimes deform. During drying, care must be taken to prevent deposition of impurities on the surfaces of the fine conductive particles.

The thickness of the layer containing the fine conductive particles as formed by drying the applied coating depends on the conditions for the next compressing step and the end use of the obtained transparent conductive multi-layer structure, and the range of about 0.1 - 10 μm is recommended.

A uniform layer is easy to form if the dispersion of the fine conductive particles in the dispersion medium is applied and dried. By applying and drying their dispersion, the fine conductive particles will form a layer even if no binder is present in the dispersion. It is not completely clear why a layer can be formed in the absence of binder but a plausible explanation is that as the liquid content of the coating decreases upon drying, the capillary force holds the fine particles together and, in addition, the very fact that the fine particles have a large specific surface area and a strong cohesive force contributes to the formation of a layer. At this stage, however, the strength of the layer is still weak and the resistance of the conductive film is not only high but also uneven to a significant degree.

In the next step, the thus formed layer containing the fine conductive particles is compressed to form a compressed layer of the fine conductive particles. Upon compressing, the strength of the coating can be enhanced because the fine conductive particles contact one another at an increased number of points and, hence, the area of contact is sufficiently increased to give a greater strength to the coating. Fine particles inherently have a great tendency to agglomerate, so upon compression, they will form a strong layer. Speaking of the conductive film, the coating has an increased strength while exhibiting lower electrical resistance.

To compress, the layer formed on the support is preferably subjected to a compressive force of at least 44 $N/mm^2$, more preferably at least 135 $N/mm^2$, most preferably at least 180 $N/mm^2$. Below 44 $N/mm^2$, the layer containing the fine conductive particles cannot be adequately compressed and it is difficult to obtain a highly conductive film. The higher the compressive force, the greater the strength of the coating and the higher the adhesion to the support. Speaking of the conductive film, it has better electrical continuity and the coating has higher strength while exhibiting stronger adhesion to the support. On the other hand, the higher the compressive force, the higher the pressure resistance to the apparatus is required to withstand. Considering these factors, the compressive force is generally recommended not to exceed 1000 $N/mm^2$. Compressing is preferably performed at temperatures near ordinary levels (15 - 40 °C) . The compressing operation that can be performed at temperatures near ordinary levels is one of the salient advantages of the invention.

The compressing means is not limited in any particular way and various means such as sheet pressing and roll pressing can be used, with the latter being preferred. Roll pressing is a method in which the film to be compressed is held between rolls and compressed as the rolls rotate. This method is highly productive and advantageous to use since it allows for uniform application of high pressure and permits roll-to-roll production.

The roll temperature on the roll press is preferably at ordinary levels (15 - 40 °C). In hot pressing or compressing in a heated atmosphere or with heated rolls, several troubles such as slackening of the resin film occur if it is compressed at high enough pressure. If the compressive force is weakened in order to ensure that the resin film as the support does not slacken under elevated temperature, the mechanical strength of the coating will drop. Speaking of the conductive film, the coating will have reduced mechanical strength while exhibiting increased electrical resistance. If it is necessary to minimize the deposition of moisture on the surfaces of the fine conductive particles, the process atmosphere may be heated to lower its relative humidity provided that the temperature should be within a range where the film will not readily slacken. Generally, a range not exceeding the glass transition temperature (secondary transition temperature) is preferred. Considering humidity variations, it is recommended to set the temperature slightly higher than the point where the required humidity is obtained. If continuous compressing is to be performed with a roll press, temperature adjustment is preferably performed to ensure that the temperature of the rolls will not increase due to heat generation.

The glass transition temperature of the resin film is determined by measurement of its dynamic viscoelasticity and refers to the temperature at which the mechanical loss of its primary dispersion peaks. To give an example, the PET film has a glass transition temperature of about 110 °C.

The rolls in the roll press are advantageously made of metal in order to apply high enough pressure. If the roll surface is soft, the fine functional particles may sometimes transfer to the rolls upon compressing, so the roll surface is preferably treated with a hard coating.

As a result of the procedure described above, the compressed layer of the fine conductive particles is formed on the support. The thickness of the compressed layer of the fine conductive particles depends on use but the range of about 0.1 - 10 μm is recommended. The compressed layer of the fine conductive particles preferably contains the resin in a volume of less 25 relative to the volume of the fine conductive particles which is taken as 100; the volume ratio between the fine conductive particles and the resin is determined at the time when the dispersion is prepared. In order to obtain a compressed layer as thick as about 10 μm, the sequence of the steps of applying the dispersion of the fine conductive particles, drying the applied coating and compressing the dried layer may be repeated. It is of course possible in the present invention to form the conductive layer on both sides of the support. The thus prepared transparent conductive layer shows good electrical continuity; it also has practically feasible levels of film strength although the binder resin is not used in as large an amount as in the prior art; what is more, it exhibits good adhesion to the support.

The above-described conductive film to be used in the invention may optionally be provided with a protective hard coating layer on the conductive layer. The hard coating layer may be formed by applying a hard coating agent, optionally dissolved in a solvent, onto the conductive layer and drying the applied coating to harden.

The hard coating agent is not limited in any particular way and various known types of hard coating agent may be used, as exemplified by silicone-, acrylic-, melamine- and otherwise based thermosetting hard coating agents. Among these, silicone-based hard coating agents are desirably used since they provide high hardness.

Alternatively, UV curable hard coating agents may be used, as exemplified by radical polymerizable hard coating agents based on unsaturated polyester resins, acrylic resins, etc., as well as epoxy-, vinyl ether- and otherwise based cationic polymerizable hard coating agents. UV curable hard coating agents are preferred from a manufacturing viewpoint such as in terms of curing reactivity. Among the UV curable hard coating agents listed above, acrylic-based radical polymerizable hard coating agents are desirable considering curing reactivity and surface hardness.

As will be described later, the conductive film in the second type of transparent conductive multi-layer structure may be produced by first overlaying the support with a hard coating layer and an anchor coating layer which, in turn, is overlaid with the conductive layer.

By applying the transparent conductive film of the above-described layer arrangement to a substrate, the transparent conductive multi-layer structure of the present invention can typically be obtained as set forth below.

Preferred examples of the substrate are a glass panel and a transparent resin panel (which may be formed of polycarbonate, PMMA, etc.).

[First type of transparent conductive multi-layer structure]

(i) Production using a glass panel as the substrate

After being treated with a silane coupling agent, a glass panel is coated with a UV curable adhesive to form an adhesive layer, to which is attached the support of the above-described transparent conductive film, and the adhesive layer is UV cured to produce a transparent conductive multi-layer structure, which comprises the glass panel, adhesive layer, support and the conductive layer.

Alternatively, the support of said transparent conductive film is coated with a UV curable adhesive to form an adhesive layer, which is attached to a glass panel treated with a silane coupling agent and UV cured to produce a transparent conductive multi-layer structure, which also comprises the glass panel, adhesive layer, support and the conductive layer.

Preferred examples of the UV curable adhesive include an acrylic adhesive and a silicone-based adhesive.

(ii) Production using a resin panel as the substrate

A polycarbonate panel is coated with a UV curable adhesive to form an adhesive layer, to which is attached the support of the above-described transparent conductive film, and the adhesive layer is UV cured to produce a transparent conductive multi-layer structure, which comprises the polycarbonate panel, adhesive layer, support and the conductive layer.

Alternatively, the support of said transparent conductive film is coated with a UV curable adhesive to form an adhesive layer, which is attached to a polycarbonate panel and UV cured to produce a transparent conductive multi-layer structure, which also comprises the polycarbonate panel, adhesive layer, support and the conductive layer.

(Characteristics)

The thus produced first type of transparent conductive multi-layer structure according to the invention has a surface electrical resistance of $10 - 10^3$ $\Omega/\square$ and a visible light transmittance of at least 70%.

For the purposes of the invention, surface electrical resistance measurement was performed with Loresta AP (MCP-T400) of Mitsubishi Petrochemical Company Ltd. or MODEL 717B of Copel Electronics Co. Ltd. Samples for measurement were prepared by cutting the conductive film into a size of 5 cm $\times$ 5 cm.

Visible light transmittance data were obtained by measuring the transmittance of light in the visible range through samples of interest with a spectrophotometer. The visible light transmittance as defined in the invention refers to the transmittance of visible light through the transparent conductive multi-layer structure taken as a whole.

For the purposes of the invention, the visible light transmittance is more preferably at least 75%, the upper limit being about 90%.

The first type of transparent conductive multi-layer structure according to the invention has preferably a haze value of 1 - 10%, more preferably 1 - 5%. The haze value as used herein is defined as the proportion of the transmittance of total rays from a light source that is occupied by the transmittance of diffuse rays excluding rays travelling straight. Hence, the lower the haze value, the higher the transparency. The haze value can be determined by the following equation specified in JIS (Japanese Industrial Standard) K 7105:

$$H = Td/Tt \qquad \text{(eq. 1)}$$

where H is haze, Tt is the transmittance of total rays, and Td is the transmittance of diffuse rays.

The first type of transparent conductive multi-layer structure according to the present invention is used with particular advantage to make glass panels as a CRT faceplate, a PDP faceplate, a construction material and a vehicular component, and to make resin panels as a construction material, a vehicular component and for use in a semiconductor cleanroom.

[Second type of transparent conductive multi-layer structure (transferrable transparent conductive multi-layer structure)]

The above-described transparent conductive film is first prepared; to this end, a support is overlaid with a hard coating layer and an anchor coating layer in that order and the anchor coating layer in turn is overlaid by the already-described method with a conductive layer (compressed) that contains fine ITO particles. The film comprises the support, hard coating layer, anchor coating layer and the conductive layer. The anchor coating layer is provided to give better adhesion to the hard coating layer and it is preferably made of an acrylic resin, a silicon-based resin, a urethane-based resin, a vinyl chloride-based resin, etc. The hard coating layer is preferably made of the same material as the hard coating agent which is used to make the already-mentioned protective hard coating layer.

(i) Production using a glass panel as the substrate

After being treated with a silane coupling agent, a glass panel is coated with a UV curable adhesive to form an adhesive layer, to which is attached the side of the above-described transparent conductive film where the conductive layer is formed, and the adhesive layer is then UV cured. Thereafter, the support of the conductive film is stripped away to produce a transparent conductive multi-layer structure, which comprises the glass panel, adhesive layer, conductive layer, anchor coating layer and the hard coating layer.
Alternatively, the side of said transparent conductive film where the conductive layer is formed is coated with a UV curable adhesive to form an adhesive layer, which is attached to a glass panel treated with a silane coupling agent and then UV cured. Thereafter, the support of the conductive film is stripped away to produce a transparent conductive multi-layer structure, which also comprises the glass panel, adhesive layer, conductive layer, anchor coating layer and the hard coating layer.

(ii) Production using a resin panel as the substrate

A polycarbonate panel is coated with a UV curable adhesive to form an adhesive layer, to which is attached the side of the above-described transparent conductive film where the conductive layer is formed, and the adhesive layer is then UV cured. Thereafter, the support of the conductive film is stripped away to produce a transparent conductive multi-layer structure, which comprises the polycarbonate panel, adhesive layer, conductive layer, anchor coating layer and the hard coating layer.
Alternatively, the side of said transparent conductive film where the conductive layer is formed is coated with a UV curable adhesive to form an adhesive layer, which is attached to a polycarbonate panel and then UV cured. Thereafter, the support of the conductive film is stripped to produce a transparent conductive multi-layer structure, which also comprises the polycarbonate panel, adhesive layer, conductive layer, anchor coating layer and the hard coating layer.

(Characteristics)

The thus produced second type of transparent conductive multi-layer structure according to the invention has a surface electrical resistance of 10 - $10^3$ $\Omega/\square$ and a visible light transmittance of at least 70%.
For the definitions of surface electrical resistance and visible light transmittance, see the description of the first type of transparent conductive multi-layer structure.
For the second type of transparent conductive multi-layer structure, the visible light transmittance is preferably at least 75%, the upper limit being about 90%.
The second type of transparent conductive multi-layer structure according to the present invention is used with particular advantage to make glass panels as a CRT faceplate, a PDP faceplate, a construction material and a vehicular component, and to make resin panels as a construction material, a vehicular component and for use in a semiconductor cleanroom.
The second type of transparent conductive multi-layer structure is so designed that it can have two ranges of haze value, one being from 1 to less than 10%, preferably 1 - 5%, and the other being from 10 to 50%, preferably 10 - 30%; choice of a suitable range depends on specific use. For the definition of haze value, see the description of the first type of transparent conductive multi-layer structure.
The second-type of transparent conductive multi-layer structure having a haze value of 10 - 50%, preferably 10 - 30%, can effectively prevent random reflection of light to suppress glare of illuminating light, so it is used with advantage in liquid-crystal displays and cathode-ray tubes of TV.

In order to lower the haze value to fall within the stated range, the two examples of production set forth above may be modified by roughening the surface of the support of the transparent conductive film. If the surface of the support is roughened, the surface of the hard coating layer which is brought into contact with the roughened surface of the support is roughened accordingly and the eventually obtained second type of transparent conductive multi-layer structure has the roughened hard coating layer on top surface, thus presenting a lowered haze value. Lower haze value can also be realized by using a material of low transparency as the support of the conductive film.

EXAMPLES

The following examples are provided for the purpose of further illustrating the present invention but are in no way to be taken as limiting.

The characteristics of various samples were evaluated by the following methods.

[Surface electrical resistance]

This parameter was measured with Loresta AP (MCP-T400) of Mitsubishi Petrochemical Company Ltd. The samples to be measured were prepared by cutting the conductive film into a size of 5 cm $\times$ 5 cm.

[Non-contact electrical resistance]

This parameter was measured on samples having the hard coating layer provided on the conductive layer. For measurement, the sample to be measured was inserted into the gap of the detection coil in MODEL 717B of Copel Electronics Co., Ltd. The upper limit of measurement by the instrument was $10^3$ $\Omega/\square$.

[90° peel test]

A 90° peel test was conducted in order to evaluate the adhesion between conductive film and support, as well as the strength of the conductive film. The following description should be read by referring to Figs. 1A and 1B.

A conductive film 1a was formed on one side of a support 1b; double-sided adhesive tape 2 was attached to the other side of the support; the assembly was cut to a test sample 1 measuring 25 mm $\times$ 100 mm. The side of the test sample 1 where the double-sided adhesive tape was applied was attached to a stainless steel plate 3; to prevent the test sample 1 from coming off, fixing Cellophane tape 4 was attached to its both ends in a longitudinal direction (see Fig. 1A).

Subsequently, as shown in Fig. 1B, an end of Cellophane tape 5 (12 mm wide; No. 29 of Nitto Denko Corp.) was attached to the test sample 1 parallel to its longer sides. The Cellophane tape 5 was attached to the test sample 1 over a length of 50 mm. The other end of the Cellophane tape 5 was attached to a tensiometer 6 and the angle the unattached portion 5a of the Cellophane tape 5 formed with the attached portion was adjusted to 90 degrees. Then, the tensiometer 6 was activated to pull the Cellophane tape 5 off the test sample 1 at a rate of 100 mm/mm. The stainless steel plate 3 to which the test sample 1 was attached was moved at the same speed as the pull speed of the Cellophane tape 5 so that the unattached portion 5a of the Cellophane tape 5 always formed an angle of 90 degrees with the test sample 1. The force F required to pull the Cellophane tape 5 off the test sample 1 was measured with the tensiometer 6.

After the peel test, the surfaces of the conductive film and the Cellophane tape were examined. If the pressure-sensitive adhesive remains on the surfaces of both, it is not the conductive layer that broke but the pressure-sensitive adhesive layer on the Cellophane layer broke. This means the strength of the pressure-sensitive adhesive was equal to F, or the force required to pull the Cellophane tape 5 off the test sample 1, and the strength of the conductive film was F or more.

In the peel test described above, the upper limit of the strength of the pressure-sensitive adhesive was 6 N/12 mm, so the value of 6 N/12 mm given as data of evaluation means that the adhesion between the conductive film and the substrate and the strength of the conductive film are both 6 N/12 mm and more if the pressure-sensitive adhesive remains on the surfaces of both conductive film and Cellophane tape. Values smaller than 6 N/12 mm refer to the case where there was no pressure-sensitive adhesive left on the surface of the conductive film but part of the conductive film adhered to the surface of the Cellophane tape, meaning that the conductive film broke at those values.

[Visible light transmittance]

The transmittance of light in the visible range through the transparent conductive multi-layer structure was measured by the combination of a spectrophotometer (V-570 of Japan Spectroscopic Co., Ltd.) with an integrating sphere (Japan Spectroscopic Co., Ltd.)

[Haze value]

In accordance with JIS K 7105, the haze value of the transparent conductive multi-layer structure was measured with a haze meter (Model TC-H3 DPK of Tokyo Denshoku Co., Ltd.)

I. First type of transparent conductive multi-layer structure

PRODUCTION 1

To 100 parts by weight of fine ITO particles having an average primary size of no more than 20 nm (SUFP-HX of Sumitomo Metal Mining Co., Ltd.), 300 parts by weight of ethanol was added and the fine ITO particles were dispersed with a disperser using zirconia beads as media. The thus obtained dispersion (coating solution) was applied to a 50-μm thick PET film with a bar coater and the applied coating was dried with warm air (50 °C) to form an ITO-containing coating, which was about 1.7 μm thick.
The thus prepared film was set on a roll press and compressed at a pressure of 660 N/mm per unit length across the width of the film (347 N/mm$^2$ per unit area) at a feed speed of 5 m/min to make a compressed ITO film. The ITO coating (conductive layer) as compressed was about 1.1 μm thick. The strength of the coating as calculated from the result of the 90° peel test was 6 N/12 mm or more.

COMPARATIVE PRODUCTION 1

A hundred parts by weight of fine ITO particles having an average primary size of no more than 20 nm (SUFP-HX of Sumitomo Metal Mining Co., Ltd.) was dispersed in 100 parts by weight of an acrylic resin solution (MT408-42 of Taisei Kako Co., Ltd.; non-volatile (NV) content = 50%) and 400 parts by weight of a solvent system consisting of a mixture of methyl ethyl ketone, toluene and cyclohexanone at a weight ratio of 1:1:1. The resulting coating solution (ITO/acrylic resin = 2:1; NV = 25%) was applied to a 50-μm thick PET film with a bar coater and the applied coating was dried with warm air (50 °C) to form an ITO-containing coating, which was about 2.3 μm thick.
The thus prepared film was set on a roll press and compressed at a pressure of 660 N/mm per unit length across the width of the film (347 N/mm$^2$ per unit area) at a feed speed of 5 m/min to make a compressed ITO film. The ITO coating (conductive layer) as compressed was about 1.6 μm thick. The strength of the coating as calculated from the result of the 90° peel test was 6 N/12 mm.

PRODUCTION 2

The conductive layer on the ITO film prepared in Production 1 was overlaid with a silicone-based hard coating layer (Tossguard 510 of GE Toshiba Silicone Co., Ltd.) in a thickness of 3.0 μm.

EXAMPLE 1

After being treated with a silane coupling agent (KBM 503 of Shin-Etsu Chemical Co., Ltd.; hereinafter, any silane coupling agent used was KBM 503), a glass panel (3 mm thick) was coated with a UV curable adhesive (KAYANOVA FOP-1100 of Nippon Kayaku Co., Ltd.; hereinafter, any UV curable adhesive used was KAYANOVA FOP-1100) to form an adhesive layer, to which was attached the support (PET film) of the transparent conductive film prepared in Production 1; thereafter, the adhesive layer was UV cured to make a transparent conductive multi-layer structure. The prepared transparent conductive multi-layer structure was evaluated for its characteristics by the methods described above; surface electrical resistance = 220 Ω/□, visible light transmittance = 83%, haze = 2.8%, non-contact electrical resistance = 223 Ω/□.

EXAMPLE 2

A transparent conductive multi-layer structure was prepared as in Example 1, except that the transparent conductive film made in Production 2 was substituted. The prepared transparent conductive multi-layer structure was evaluated for its characteristics by the methods described above; non-contact surface electrical resistance = 225 Ω/□, visible light transmittance = 84%, haze = 3.0%.

## EXAMPLE 3

A glass panel (3 mm thick) was treated with a silane coupling agent. In a separate step, the PET side of the transparent conductive film prepared in Production 1 was coated with a UV curable adhesive to form an adhesive layer, which was attached to the glass panel; thereafter, the adhesive layer was UV cured to make a transparent conductive multi-layer structure. The prepared transparent conductive multi-layer structure was evaluated for its characteristics by the methods described above; surface electrical resistance = 220 $\Omega/\square$, visible light transmittance = 83%, haze = 2.8%.

## EXAMPLE 4

A transparent conductive multi-layer structure was prepared as in Example 3, except that the transparent conductive film made in Production 2 was substituted. The prepared transparent conductive multi-layer structure was evaluated for its characteristics by the methods described above; non-contact surface electrical resistance = 225 $\Omega/\square$, visible light transmittance = 84%, haze = 3.0%.

## EXAMPLE 5

A polycarbonate panel (5 mm thick) was coated with a UV curable adhesive to form an adhesive layer, to which was attached the PET side of the transparent conductive film prepared in Production 1; thereafter, the adhesive layer was UV cured to make a transparent conductive multi-layer structure. The prepared transparent conductive multi-layer structure was evaluated for its characteristics by the methods described above; surface electrical resistance = 220 $\Omega/\square$, visible light transmittance = 82%, haze = 3.3%.

## EXAMPLE 6

A transparent conductive multi-layer structure was prepared as in Example 5, except that the transparent conductive film made in Production 2 was substituted. The prepared transparent conductive multi-layer structure was evaluated for its characteristics by the methods described above; non-contact surface electrical resistance = 225 $\Omega/\square$, visible light transmittance = 83%, haze = 3.5%.

## EXAMPLE 7

The PET side of the transparent conductive film prepared in Production 1 was coated with a UV curable adhesive to form an adhesive layer, which was attached to a polycarbonate panel (5 mm thick) and then UV cured to produce a transparent conductive multi-layer structure. The prepared transparent conductive multi-layer structure was evaluated for its characteristics by the methods described above; surface electrical resistance = 220 $\Omega/\square$, visible light transmittance = 82%, haze = 3.3%.

## EXAMPLE 8

A transparent conductive multi-layer structure was prepared as in Example 7, except that the transparent conductive film made in Production 2 was substituted. The prepared transparent conductive multi-layer structure was evaluated for its characteristics by the methods described above; non-contact surface electrical resistance = 225 $\Omega/\square$, visible light transmittance = 83%, haze = 3.5%.

## COMPARATIVE EXAMPLE 1

A transparent conductive multi-layer structure was prepared as in Example 1, except that the transparent conductive film made in Comparative Production 1 was substituted. The prepared transparent conductive multi-layer structure was evaluated for its characteristics by the methods described above; surface electrical resistance = 3.5 x $10^3$ $\Omega/\square$, visible light transmittance = 84%, haze = 2.6%.

## COMPARATIVE EXAMPLE 2

A transparent conductive multi-layer structure was prepared as in Example 3, except that the transparent conductive film made in Comparative Production 1 was substituted. The prepared transparent conductive multi-layer structure was evaluated for its characteristics by the methods described above; surface electrical resistance = 3.5 x

$10^3$ Ω/□, visible light transmittance = 84%, haze = 2.6%.

COMPARATIVE EXAMPLE 3

A transparent conductive multi-layer structure was prepared as in Example 5, except that the transparent conductive film made in Comparative Production 1 was substituted. The prepared transparent conductive multi-layer structure was evaluated for its characteristics by the methods described above; surface electrical resistance = $3.5 \times 10^3$ Ω/□, visible light transmittance = 83%, haze = 3.0%.

COMPARATIVE EXAMPLE 4

A transparent conductive multi-layer structure was prepared as in Example 7, except that the transparent conductive film made in Comparative Production 1 was substituted. The prepared transparent conductive multi-layer structure was evaluated for its characteristics by the methods described above; surface electrical resistance = $3.5 \times 10^3$ Ω/□, visible light transmittance = 83%, haze = 3.0%.

II. Second type of transparent conductive multi-layer structure (transferrable transparent conductive multi-layer structure)

PRODUCTION 3

A PET film 50 μm thick was overlaid with a 3-μm thick hard coating layer (Tossguard 510; hereinafer, any hard coating layer used was Tossguard 510) and a 1-μm thick anchor coating layer (a mixture of silicone-based varnish and silane-based curing agent in a weight ratio of 100:1; hereinafter, any anchor coating layer used was this mixture) in the order written. In a separate step, to 100 parts by weight of fine ITO particles having an average primary size of no more than 20 nm (SUFP-HX of Sumitomo Metal Mining Co., Ltd.), 300 parts by weight of ethanol was added and the fine ITO particles were dispersed with a disperser using zirconia beads as media. The thus obtained dispersion (coating solution) was applied to the anchor coating layer on the PET film with a bar coater and the applied coating was dried with warm air (50 °C) to form an ITO-containing coating, which was about 1.7 μm thick.

The thus prepared film was set on a roll press and compressed at a pressure of 660 N/mm per unit length across the width of the film (347 N/mm$^2$ per unit area) at a feed speed of 5 m/min to make a compressed ITO film. The ITO coating (conductive layer) as compressed was about 1.1 μm thick.

COMPARATIVE PRODUCTION 2

A PET film 50 μm was overlaid with a 3-μm thick hard coating layer and a 1-μm thick anchor coating layer in that order. In a separate step, 100 parts by weight of fine ITO particles having an average primary size of no more than 20 nm (SUFP-HX of Sumitomo Metal Mining Co., Ltd.) was dispersed in 100 parts by weight of an acrylic resin solution (MT408-42 of Taisei Kako Co., Ltd.; non-volatile (NV) content = 50%) and 400 parts by weight of a solvent system consisting of a mixture of methyl ethyl ketone, toluene and cyclohexanone at a weight ratio of 1:1:1. The resulting coating solution (ITO/acrylic resin = 2:1; NV = 25%) was applied to the 50-μm thick PET film with a bar coater and the applied coating was dried with warm air (50 °C) to form an ITO-containing coating, which was about 2.3 μm thick.

The thus prepared film was set on a roll press and compressed at a pressure of 660 N/mm per unit length across the width of the film (347 N/mm$^2$ per unit area) at a feed speed of 5 m/min to make a compressed ITO film. The ITO coating (conductive layer) as compressed was about 1.6 μm thick.

PRODUCTION 4

In Production 3, the PET film was replaced by one having a roughened surface (U-4 of Teijin Ltd.), which was overlaid with a hard coating layer as in Production 3, followed by the same sequence of steps as in Production 3 to produce an ITO film.

EXAMPLE 9

After being treated with a silane coupling agent, a glass panel (3 mm thick) was coated with a UV curable adhesive to form an adhesive layer, to which was attached the conductive surface of the transparent conductive film prepared in Production 3; the adhesive layer was then UV cured. Thereafter, the PET film was stripped away from the transparent conductive film to make a transparent conductive multi-layer structure (consisting of the glass panel, adhesive layer, conductive layer, anchor coating layer and the hard coating layer). The prepared transparent conductive multi-layer structure was evaluated for its characteristics by the methods described above; non-contact surface electrical resistance = 225 $\Omega/\square$, visible light transmittance = 85%, haze = 2.3%.

EXAMPLE 10

A glass panel (3 mm thick) was treated with a silane coupling agent. In a separate step, the conductive surface of the transparent conductive film prepared in Production 3 was coated with a UV curable adhesive to form an adhesive layer, which was attached to the glass panel and UV cured; there-after, the PET film was stripped away from the transparent conductive film to make a transparent conductive multi-layer structure (consisting of the glass panel, adhesive layer, conductive layer, anchor coating layer and the hard coating layer). The prepared transparent conductive multi-layer structure was evaluated for its characteristics by the methods described above; non-contact surface electrical resistance = 225 $\Omega/\square$, visible light transmittance = 85%, haze = 2.3%.

EXAMPLE 11

A polycarbonate panel (5 mm thick) was coated with a UV curable adhesive to form an adhesive layer, to which was attached the conductive surface of the transparent conductive film prepared in Production 3; the adhesive layer was then UV cured. Thereafter, the PET film was stripped away from the transparent conductive film to make a transparent conductive multi-layer structure (consisting of the polycarbonate panel, adhesive layer, conductive layer, anchor coating layer and the hard coating layer). The prepared transparent conductive multi-layer structure was evaluated for its characteristics by the methods described above; non-surface electrical resistance = 225 $\Omega/\square$, visible light transmittance = 84%, haze = 2.73%.

EXAMPLE 12

The PET side of the transparent conductive film prepared in Production 3 was coated with a UV curable adhesive to form an adhesive layer, which was attached to a polycarbonate panel (5 mm thick) and then UV cured. Thereafter, the PET film was stripped away from the transparent conductive film to produce a transparent conductive multi-layer structure (consisting of the polycarbonate panel, adhesive layer, conductive layer, anchor coating layer and the hard coating layer). The prepared transparent conductive multi-layer structure was evaluated for its characteristics by the methods described above; non-contact surface electrical resistance = 225 $\Omega/\square$, visible light transmittance = 84%, haze = 2.7%.

COMPARATIVE EXAMPLE 5

A transparent conductive multi-layer structure was prepared as in Example 9, except that the transparent conductive film made in Comparative Production 2 was substituted. The prepared transparent conductive multi-layer structure was evaluated for its characteristics by the methods described above; non-surface electrical resistance $\geq 10^3$ $\Omega/\square$, visible light transmittance = 85%, haze = 2.2%.
The results of the non-contact surface electrical resistance measurements made in Examples 1 and 2 show that the surface electrical resistance was substantially the same whether the hard coating layer was formed or not; therefore, the multi-layer structure of Comparative Example 5 would have a surface electrical resistance of about 3.5 $\times 10^3$ $\Omega/\square$, almost equal to the value for the sample prepared in Comparative Example 1. This conclusion may safely be applied to the following comparative Examples.

COMPARATIVE EXAMPLE 6

A transparent conductive multi-layer structure was prepared as in Example 10, except that the transparent conductive film made in Comparative Production 2 was substituted. The prepared transparent conductive multi-layer structure was evaluated for its characteristics by the methods described above; non-contact surface electrical resistance $\geq 10^3$ $\Omega/\square$, visible light transmittance = 85%, haze = 2.2%.

COMPARATIVE EXAMPLE 7

A transparent conductive multi-layer structure was prepared as in Example 11, except that the transparent conductive film made in Comparative Production 2 was substituted. The prepared transparent conductive multi-layer structure was evaluated for its characteristics by the methods described above; non-surface electrical resistance $\geq 10^3$

$\Omega/\square$, visible light transmittance = 83%, haze = 2.6%.

COMPARATIVE EXAMPLE 8

A transparent conductive multi-layer structure was prepared as in Example 12, except that the transparent conductive film made in Comparative Production 2 was substituted. The prepared transparent conductive multi-layer structure was evaluated for its characteristics by the methods described above; non-contact surface electrical resistance $\geq 10^3$ $\Omega/\square$, visible light transmittance = 83%, haze = 2.6%.

EXAMPLE 13

A transparent conductive multi-layer structure was prepared as in Example 9, except that the transparent conductive film made in Production 4 was substituted. The prepared transparent conductive multi-layer structure was evaluated for its characteristics by the methods described above; non-contact surface electrical resistance = 225 $\Omega/\square$, visible light transmittance = 84%, haze = 23%.

III. Changing the coating thickness and compressing pressure

EXAMPLES 14 AND 15

Compressed ITO films were prepared as in Production 1, except that the coating thickness and the compressing pressure were varied as shown below in Table 1 (Productions 5 and 6).
Transparent conductive multi-layer structures were prepared as in Example 1, except that the compressed ITO films obtained in Productions 5 and 6 were substituted. The results of evaluation of those compressed ITO films are also shown in Table 1.

EXAMPLES 16 AND 17

Compressed ITO films were prepared as in Production 3, except that the coating thickness and the compressing pressure were varied as shown below in Table 1 (Productions 7 and 8).
Transparent conductive multi-layer structures were prepared as in Example 11, except that the compressed ITO films obtained in Productions 7 and 8 were substituted. The results of evaluation of those compressed ITO films are also shown in Table 1.

EXAMPLES 18 AND 19

Compressed ITO films were prepared as in Production 4, except that the coating thickness and the compressing pressure were varied as shown below in Table 1 (Productions 9 and 10).
Transparent conductive multi-layer structures were prepared as in Example 13, except that the compressed ITO films obtained in Productions 9 and 10 were substituted.
The results of evaluation of those compressed ITO films are also shown in Table 1.

Table 1

|  | Ex. 14 | Ex. 15 | Ex. 16 | Ex. 17 | Ex. 18 | Ex.19 |
|---|---|---|---|---|---|---|
| Production No. | 5 | 6 | 7 | 8 | 9 | 10 |
| Coating thickness, $\mu$m | 5.5 | 1.7 | 5.5 | 1.7 | 5.5 | 5.5 |
| Thickness of coating after compression, $\mu$m | 4.3 | 1.3 | 4.3 | 1.3 | 4.3 | 1.3 |
| Pressure per unit area, N/mm$^2$ | 500 | 56 | 500 | 56 | 500 | 56 |
| Electrical resistance, $\Omega/\square$ | 50 | 970 | 50 | 970 | 50 | 970 |
| Visible light transmittance, % | 73 | 79 | 74 | 80 | 73 | 79 |
| Haze value, % | 7.2 | 3.5 | 6.8 | 3.2 | 27 | 24 |

As described above in detail, the present invention can produce transparent conductive multi-layer structures by utilizing a coating method which retains the advantages of its easiness of forming large-area conductive films, simplification of apparatus, high productivity and low manufacturing cost, by firstly obtaining a transparent conductive film that has low enough surface resistance to give high conductivity while exhibiting satisfactory transparency, and then applying the transparent conductive film to a glass or resin panel. The transparent conductive multi-layer structure of the invention is preferably used to make glass panels as a CRT faceplate, a PDP faceplate, a construction material and a vehicular component, or to make resin panels as a construction material, a vehicular component and for use in a semiconductor cleanroom.

**Claims**

1. A transparent conductive multi-layer structure which comprises a substrate overlaid with a support which in turn is overlaid with a conductive layer containing fine conductive particles, said multi-layer structure having a surface resistance of 10 - $10^3$ $\Omega/\square$ and a visible light transmittance of at least 70%.

2. The transparent conductive multi-layer structure according to claim 1, wherein the fine conductive particles are the fine particles of indium-tin oxide (ITO).

3. The transparent conductive multi-layer structure according to claim 1, wherein the substrate is a glass panel or a resin panel.

4. The transparent conductive multi-layer structure according to claim 1, wherein the conductive layer is overlaid with a hard coating layer.

5. The transparent conductive multi-layer structure according to claim 1, which has a haze value of 1 - 10%.

6. A process for producing the transparent conductive multi-layer structure of claim 1 which comprises producing a transparent conductive film by applying a dispersion of fine conductive particles onto a support, drying the applied coating to form a layer containing the fine conductive particles, compressing the layer to form a compressed layer of the fine conductive particles, and thereafter applying thusly produced transparent conductive film on a substrate.

7. The process according to claim 6, wherein the dispersion of the fine conductive particles is substantially free of a binder resin.

8. A transparent conductive multi-layer structure which comprises a substrate overlaid with a conductive layer containing fine conductive particles, said multi-layer structure having a surface resistance of 10 - $10^3$ $\Omega/\square$ and a visible light transmittance of at least 70%.

9. The transparent conductive multi-layer structure according to claim 8, wherein the fine conductive particles are the fine particles of indium-tin oxide (ITO).

10. The transparent conductive multi-layer structure according to claim 8, wherein the substrate is a glass panel or a resin panel.

11. The transparent conductive multi-layer structure according to claim 8, wherein the conductive layer is overlaid with an anchor coating layer and a hard coating layer in that order.

12. The transparent conductive multi-layer structure according to claim 8, which has a haze value of 1% to less than 10%.

13. The transparent conductive multi-layer structure according to claim 8, which has a haze value of 10 - 50%.

14. A process for producing the transparent conductive multi-layer structure of claim 8 which comprises producing a transparent conductive film by applying a dispersion of fine conductive particles onto a support, drying the applied coating to form a layer containing the fine conductive particles, then compressing said layer to form a compressed fine conductive particles layer, and subsequently adhering to a substrate said compressed fine conductive particle layer of the transparent film, and thereafter stripping away the support from the compressed conductive layer.

15. A process for producing the transparent conductive multi-layer structure of claim 8 which comprises preparing a support overlaid with a hard coating layer and an anchor coating layer in the order, producing a transparent conductive film by applying a dispersion of fine conductive particles onto the anchor coating layer, drying the applied coating to form a layer containing the fine conductive particles, then compressing said layer to form a compressed fine conductive particles layer, and subsequently adhering to a substrate said compressed fine conductive particles layer, and thereafter stripping away the support from the hard coating layer.

16. The process according to claim 14 or 15, wherein the dispersion of the fine conductive particles is substantially free of a binder resin.

FIG. 1A

FIG. 1B

<table>
<tr><td colspan="2" align="center"><b>INTERNATIONAL SEARCH REPORT</b></td><td>International application No.<br><br>PCT/JP01/04100</td></tr>
</table>

| A. CLASSIFICATION OF SUBJECT MATTER |
|---|
| $Int.Cl^7$    H01B 5/14, B32B 5/16, B32B 7/02 104, C08J 7/04, C03C17/23 |

According to International Patent Classification (IPC) or to both national classification and IPC

| B.    FIELDS SEARCHED |
|---|
| Minimum documentation searched (classification system followed by classification symbols)<br>    $Int.Cl^7$    H01B 5/14, B32B 5/16, B32B 7/02 104, C08J 7/04, C03C17/23 |

Documentation searched other than minimum documentation to the extent that such documents are included in the fields searched
    Jitsuyo Shinan Koho          1926-1996    Toroku Jitsuyo Shinan Koho  1994-2001
    Kokai Jitsuyo Shinan Koho    1971-2001    Jitsuyo Shinan Toroku Koho  1996-2001

Electronic data base consulted during the international search (name of data base and, where practicable, search terms used)
    JOIS
    DIALOG(WPI/L)

C.    DOCUMENTS CONSIDERED TO BE RELEVANT

| Category* | Citation of document, with indication, where appropriate, of the relevant passages | Relevant to claim No. |
|---|---|---|
| X<br>Y | JP 8-83515 A (Fujimori Kogyo Co., Ltd., Toyobo Co., Ltd.),<br>26 March, 1996 (26.03.96),<br>Full text    (Family: none) | 1~3,5,8~10,12<br>4,11 |
| X | JP 9-57892 A (Mitsui Toatsu Chemicals Inc.),<br>04 March, 1997 (04.03.97),<br>Full text    (Family: none) | 1~4,8~10 |
| X | JP 2000-71375 A (JSR Corporation),<br>07 March, 2000 (07.03.00),<br>Full text    (Family: none) | 1~3 |
| X<br>Y | JP 5-342927 A (Sumitomo Metal Mining Co., Ltd.),<br>24 December, 1993 (24.12.93),<br>Full text    (Family: none) | 8~10,12~13<br>11 |
| Y | JP 10-112597 A (Mitsui Toatsu Chemicals Inc.),<br>28 April, 1998 (28.04.98),<br>Par. Nos. [0011] to [0045]; Figs. 1 to 3    (Family: none) | 4,11 |
| A | EP 554546 A1 (C.I.KASEI CO., LTD), | 6,7,14~16 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    16 August, 2001 (16.08.01) | Date of mailing of the international search report<br>    28 August, 2001 (28.08.01) |
|---|---|
| Name and mailing address of the ISA/<br>    Japanese Patent Office | Authorized officer |
| Facsimile No. | Telephone No. |

Form PCT/ISA/210 (second sheet) (July 1992)

**INTERNATIONAL SEARCH REPORT**

| International application No. |
|---|
| PCT/JP01/04100 |

| Box I  Observations where certain claims were found unsearchable (Continuation of item 1 of first sheet) |
|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box II  Observations where unity of invention is lacking (Continuation of item 2 of first sheet) |
|---|

This International Searching Authority found multiple inventions in this international application, as follows:

There must be a technical relationship among the inventions involving special technical features linking the inventions to form a single general inventive concept so that the inventions of the claims may comply with the requirement of unity of invention. The inventions of claims 1-16 are so linked only in the technical matter, i.e., "a transparent conductive multilayer body having a surface electric resistivity of 10 to $10^3$ $\Omega/\square$ and a visible light transmittance of 70% or more". However the technical matter is disclosed in prior art documents, for example, JP 8-83515 A (FUJIMORI KOGYOU CO., LTD. & Toyobo Co., Ltd.) March 26, 1996 (26.01.96), and consequently the technical matter cannot be a special technical feature.

Therefore there is no technical relationship among the inventions of claims 1- 16 involving special technical features linking the inventions to form a single general inventive concept.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐     The additional search fees were accompanied by the applicant's protest.
                          ☐     No protest accompanied the payment of additional search fees.

Form PCT/ISA/210 (continuation of first sheet (1)) (July 1992)

EP 1 209 698 A1

## INTERNATIONAL SEARCH REPORT

International application No.

PCT/JP01/04100

C (Continuation). DOCUMENTS CONSIDERED TO BE RELEVANT

| Category* | Citation of document, with indication, where appropriate, of the relevant passages | Relevant to claim No. |
|---|---|---|
| | 11 August, 1993 (11.08.93),<br>& JP 5-162230 A    & US 5405681 A | |
| A | JP 7-172426 A (Dainippon Printing Co., Ltd.),<br>11 July, 1995 (11.07.95)   (Family: none) | 6,7,14~16 |
| A | JP 7-235220 A (Sumitomo Metal Mining Co., Ltd.),<br>05 September, 1995 (05.09.95)   (Family: none) | 6,7,14~16 |

Form PCT/ISA/210 (continuation of second sheet) (July 1992)

20